**Europäisches Patentamt**

**European Patent Office**

**Office européen des brevets**

(19)

(11) Publication number : **0 327 357 B1**

(12)

# EUROPEAN PATENT SPECIFICATION

(45) Date of publication of patent specification :
**19.08.92 Bulletin 92/34**

(51) Int. Cl.⁵ : **B60T 11/20**

(21) Application number : **89301003.3**

(22) Date of filing : **02.02.89**

(54) **Master cylinder.**

(30) Priority : **02.02.88 GB 8802298**

(43) Date of publication of application :
**09.08.89 Bulletin 89/32**

(45) Publication of the grant of the patent :
**19.08.92 Bulletin 92/34**

(84) Designated Contracting States :
**DE ES FR GB IT**

(56) References cited :
FR-A- 2 464 169
GB-A- 2 052 656
US-A- 3 064 432
US-A- 4 445 335

(73) Proprietor : **LUCAS INDUSTRIES public limited company
Great King Street
Birmingham, B19 2XF West Midlands (GB)**

(72) Inventor : **Farr, Glyn Phillip Reginals
21 The Hamlet
Leek Wotton Warwick, CV35 7QW (GB)**
Inventor : **Burns, Sean
15 Melstock Road
Kings Heath Birmingham, B14 7ND (GB)**
Inventor : **Jones, Dean Warren
44 Malborough Road Maindee
Newport Gwent, NP9 0BY (GB)**
Inventor : **Cunningham, Phillip
21, Cwm Cwddy DriveRhiwderin Heights
Newport Gwent (GB)**
Inventor : **Harris, Brian
103 Brecon Rise Pant Merthyr
Tydfil Glamorgan, CF48 2EF (GB)**

(74) Representative : **Waite, Anthony William et al
MARKS & CLERK Alpha Tower Suffolk Street
Queensway
Birmingham B1 1TT (GB)**

## Description

This invention relates to a master cylinder, primarily for a vehicle braking system, and of the general kind having a plurality of pressure cylinders containing respective pistons movable therein to pressurise fluid for operation of brake actuation means connected thereto, in use, the cylinder having means for the connection thereto of a low pressure fluid supply.

US-A-4445335 discloses a master cylinder having a cylinder body containing a plurality of longitudinally arranged pressure chambers within which fluid is pressurised by the action of respective pistons slidable therein, fluid outlet connections communicating respectively with said chambers, and fluid inlet connections for connection to fluid supply means, the inlet connections being positioned transversely of the cylinder longitudinal axis and communicating respectively with said chambers by way of passages formed in the body.

An object of the present invention is to provide a master cylinder of the aforesaid general kind which, in certain of its proposed forms, is more compact axially than some conventional master cylinders and which has other advantageous features to be enumerated.

According to the present invention, a master cylinder of the aforesaid general kind has inlet connections positioned respectively to either side of the cylinder longitudinal axis.

In a typical practical arrangement, the inlet connections are disposed towards the forward end of the cylinder in the direction of working travel of the pistons. Conveniently, respective fluid outlets from the chambers are arranged at either side of the inlet connections in the cylinder longitudinal direction.

The cylinder preferably has internal annular bearing members of which the internal surfaces have a radial dimension smaller than that of the cylinder and each serve as sliding bearing surfaces for the piston, each said member carrying at least one seal acting on the associated external piston surface and having a passage therethrough providing communication between one of said fluid inlet connections and one of said chambers.

Preferably, the bearing member is retained positively in the cylinder longitudinal direction. This may conveniently be achieved by providing opposed fixed surfaces within the body for engagement by oppositely facing surfaces of the bearing member. Said opposed fixed surfaces may be on the cylinder body itself, on one or more separate components held in fixed positions relative to the body, or on a combination of integral body parts and separate components.

The invention will now be described, by way of example, with reference to the accompanying drawings in which:

Figure 1 is a longitudinal cross-section of one form of the master cylinder of the invention;

Figure 2 is an end view from the left of the master cylinder of Figure 1 with an outlet port thereof illustrated in an alternative position, the master cylinder having a fluid reservoir mounted thereon;

Figure 3 is a plan view of the master cylinder of Figure 2 with the reservoir omitted;

Figure 4 is side elevation, to a reduced scale, of the master cylinder of Figures 1 to 3 attached to a brake servo booster, and

Figure 5 is a longitudinal cross-section of an alternative form of the master cylinder of the invention.

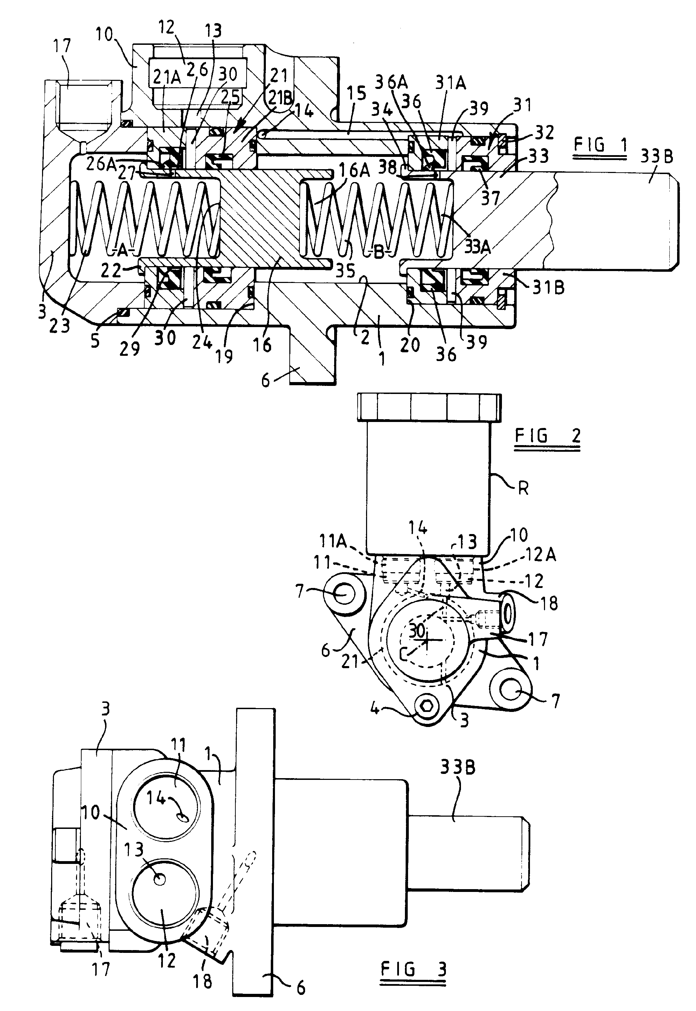

Referring to Figures 1 to 3, these illustrate a master cylinder having a body 1 with a cylindrical through bore 2, one end of which is closed by an end member 3 secured thereto by bolts 4 (Figure 3), a seal 5 being provided between the end member and body in order to ensure a fluid-tight structure. The body is provided with a mounting flange 6 having holes 7 through which fixing bolts may be passed to secure the master cylinder to a fixed support, such as a vehicle bulkhead.

The body 1 has an upstanding boss 10 which forms a pair of inlet connections 11, 12, which are mutually disposed transversely of the longitudinal axis C of the cylinder. A reservoir R is connected to the body by way of the connections 11, 12 the latter respectively receiving, in sealing relationship, a pair of hollow spigots 11A, 12A, projecting from the base of the reservoir. The inlet connection 12 communicates with the interior of the cylinder via a radial port 13, while the inlet connection 11 is provided with a port 14 (Figure 3) extending obliquely to communicate with a passage 15 (Figure 1) extending axially within the body 1.

The bore 2 is divided by a piston 16 into two pressure chambers A, B which are associated with respective fluid pressure outlets 17, 18, disposed respectively at either side of the inlet connections 11, 12 in the longitudinal direction of the cylinder. The outlet 17 is illustrated in alternative positions respectively in Figure 1 and Figures 2 and 3. The fluid inlet connection 12 is associated via the port 13 with the chamber A and the inlet connection 11 via the port 14 and passage 15 with the chamber B.

The bore 2 is stepped internally to provide oppositely facing internal shoulders 19, 20. A first annular bearing member 21, composed of two contiguous parts 21A, 21B, is disposed within the body against the shoulder 19 and clamped in position against that shoulder by the end member 3. The bearing member 21 has an internal diameter smaller than that of the bore 2 and its internal surface supports the piston 16 for axial sliding movement within the bore. The retracted position of the piston 16 is determined by engagement of a radial flange 22 thereof against the left-hand end of the bearing member 21, as seen in the drawing, and the piston is urged into its retracted position by a spring 23 acting between the end member 3 and an internal end surface 24 of the piston which, in this embodiment, is partially hollow and houses part of the length of the spring 23.

A seal 25 housed in the part 21B of the bearing member 21 engages the piston 16 and acts to isolate the chambers A and B one from the other. A further seal 26 housed within the part 21A of the bearing member 21 engages the piston 16 forwardly of the seal 25 by way of a lip 26A and acts as a pressure seal. The piston 16 is provided with a recuperation port 27 formed through the wall of the hollow part of the piston and which, in the rest position of the piston as illustrated, rests opposite to a recess 29 formed within the seal 26 and is thereby able to provide communication between the fluid inlet 12 and the chamber A via radial passages 30 through the bearing member 21. With the two part bearing member illustrated, the passages 30 may conveniently be formed by grooves in one of the mating surfaces of the parts 21A, 21B. It will be understood, however, that the bearing member 21 may be formed as a single piece, in which case the passages 30 would be formed by radial drilling, for example.

A further annular bearing member 31 is lodged against the shoulder 20 of the body and held in position by a circlip 32 housed within a groove of the body. The bearing member 31 has the same internal diameter as the bearing member 21 and supports a piston 33 for sliding movement therein. A radial flange 34 of the piston determines the retracted postion thereof by abutment against the bearing member 31, the piston being urged towards its retracted position by a spring 35 acting between the pistons 16 and 33, the spring being housed partially within opposed hollow end portions 16A, 33A respectively of of the pistons. The bearing member 31 is illustrated in two parts 31A, 31B, the part 31A carrying a pressure seal 36 and the part 31B carrying a further seal 37 which isolates the interior of the cylinder from the exterior. A recuperation port 38 is provided in the wall of the hollow part of piston 33 and located in relation to the seal 36 in a similar manner to that described for the port 27 in relation to the seal 26. Radial passages 39 in the bearing member 31 correspond to the passages 30 of the bearing member 21 and communicate with the passage 15 leading to the fuid inlet connection 11. The bearing member 31 could alternatively be a single component with the consequent modifications described in relation to the bearing member 21.

With the components illustrated in their rest positions, the reservoir is in communication, via the fluid inlets 11 and 12 respectively with the chambers A and B via the recuperation ports 27, 38. When actuating force is applied to the external extension 33B of the piston 33, inward movement of this piston brings its recuperation port 38 onto the adjacent lip 36A of the seal 36 and thereby isolates the chamber B from the fluid inlet 11. The spring 35 is a relatively light return spring and insufficiently strong to transmit actuating force from the piston 33 to the piston 16. Actuating movement of the piston 16 only occurs, therefore, as a result of the build-up of pressure in the chamber B following cut-off of the recuperation port 38, as described above. Once both of the recuperation ports 27, 38 have been blocked by the co-operating lips 27A, 36A of the respective seals 26, 36, continued movement of the pistons expels fluid under pressure from the pressure fluid outlets 17, 18 for actuation of brakes connected thereto. The chambers A and B would normally be connected independently to different parts of a vehicle braking system in order to form a split system for security reasons, in known manner. Release of actuating force on the extension 33B enables the return springs 23, 35 to return the pistons to their illustrated rest positions.

The disposition of the fluid inlet connections 12, 13 transversely of the cylinder longitudinal axis enables the cylinder to have a reduced axial dimension, as compared with some conventional cylinders. Moreover, the use of detachable bearing members 21, 31 enables these to be interchanged for others having different internal diameters so that a single cylinder body can be used with a range of different piston diameters. A further advantage of the bearing members 21, 31 is that it is unnecessary to finish the internal bore of the cylinder to a high degree of accuracy since the surface of the bore, as such, is not contacted by sliding components. Thus, only the bearing members 21, 31 need be finished accurately and manufacture of the cylinder is thereby considerably reduced as compared with some conventional arrangements.

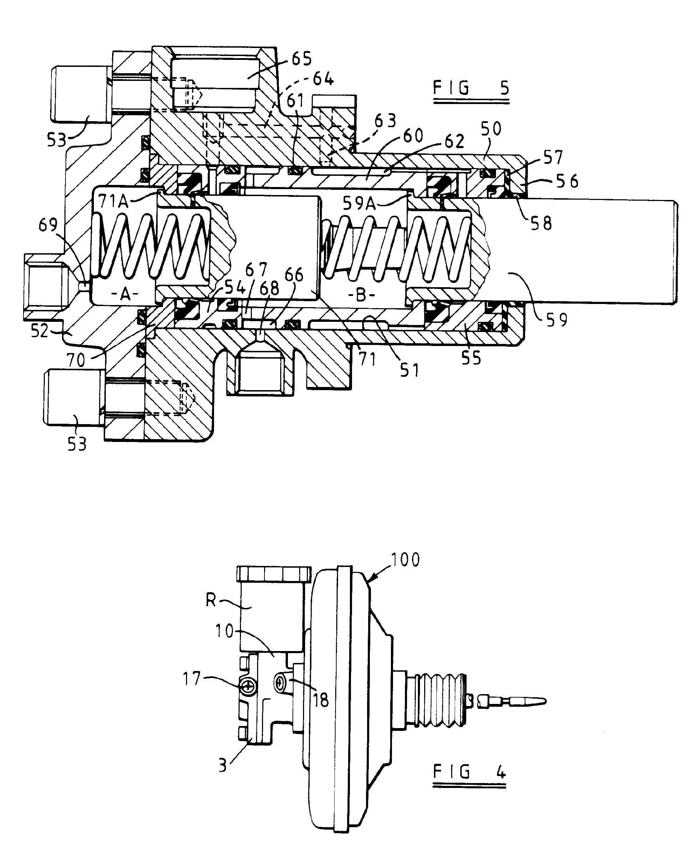

The alternative embodiment illustrated in Figure 5 is essentially similar to that of Figure 1 but embodies a number of refinements for convenience of manufacture. The master cylinder described has a body 50 with a through bore 51, an end of which is closed by an end member 52 secured in position on the body by bolts 53. The body contains a pair of spaced bearing members 54, 55 similar to those of Figure 1. In this embodiment, however, the right hand end member 55 lodges against the close end 56 of the body, with the possible interposition of a radial flange 57 of a plastic bearing sleeve 58 for the outermost piston 59. The end members 54, 55 are separated by a separate sleeve 60 having a seal 61 sealing against the bore 51. To the right hand side of the seal 61, the sleeve is relieved to form an axially extending passage 62 providing communication between a radial bore 63 communicating via an axial passage 64 with the far one (not shown) of a pair transversely disposed inlet connections, of which one is illustrated at 65, which connections would normally receive reservoir connectors (not shown) in the manner shown in Figure 3. At the left hand side of the seal 61, the sleeve 60 is relieved to provide a further passage 66 and is also provided with a radial port 67 so that passage 66 provides communication between one of the pressure chambers B and a pressure outlet port 68. The pressure outlet port for the other chamber A is illustrated at 69.

A collar bearing 70, as of plastics material for example, is provided between the bearing member 54 and the end member 52 and provides an annular bearing surface for engagement by the forward piston 71 in order to provide additional support for the latter. It also provides a backstop for the piston 71 which engages it, when retracted, by way of a flange 71A; similarly the sleeve 60 acts as a backstop for the piston 59 which engages it by way of a flange 59A. The use of the sleeve 60 in this embodiment greatly facilitates manufacture of the cylinder by eliminating the necessity for some internal drillings.

Figure 4 illustrates the master cylinder of Figures 1 to 3 attached to a brake servo booster 100. This arrangement illustrates the advantageously compact nature of the master cylinder resulting from the transversely arranged fluid inlet connections.

Although the master cylinder of the invention has been illustrated as having a plurality of bearing members of the same internal diameter, it would be possible for the master cylinder to have bearing members of different diameters supporting respective pistons of correspondingly differing diameters.

## Claims

1. A master cylinder comprising a cylinder body (1) containing a plurality of longitudinally arranged pressure chambers (A, B) within which fluid is pressurised by the action of respective pistons (16, 33) slidable therein, fluid outlet connections (17, 18) communicating respectively with said chambers, and fluid inlet connections (11, 12) for connection to fluid supply means (R), the inlet connections being positioned transversely of the cylinder longitudinal axis (C) and communicating respectively with said chambers by way of passages (13 and 14, 15) formed in the body (1), characterised in that the inlet connections (11, 12) are positioned respectively to either side of the longitudinal axis (C).

2. A master cylinder according to Claim 1, characterised in that the inlet connections (11, 12) are disposed towards the forward end of the cylinder in the direction of working travel of the pistons (16, 33).

3. A master cylinder according to Claim 1 or Claim 2, characterised in that said fluid outlet connections (17, 18) are arranged at either side of the inlet connections in the cylinder longitudinal direction.

4. A master cylinder according to any one of Claims 1 to 3, characterised in that one (17) of the fluid outlet connections is in an end cap (3) secured to the cylinder body at the forward end of the latter.

5. A master cylinder according to any one of the preceding claims, characterised in that said fluid inlet connections (11, 12) have respective supply spigots (11A, 12A) of a reservoir engaged therein in sealed relationship.

6. A master cylinder according to any one of the preceding claims, characterised in that the cylinder body (1) has internal annular bearing members (21, 31) of which the internal surfaces have a radial dimension smaller than that of the cylinder and serve as sliding bearing surfaces for the pistons, each said member carrying at least one seal (26, 36) acting on the associated external piston surface and having a passage (30, 39) therethrough providing communication between one of said fluid inlet connections (11, 12) and one of said chambers (A, B).

7. A master cylinder according to Claim 6, characterised in that each bearing member (21, 31) is held positively within the body between oppositely facing fixed surfaces, of which at least one (19, 20) is on the body (1).

8. A master cylinder according to Claim 6 or Claim 7 characterised in that each piston (16, 31) has a radially projecting flange (22, 34) at its forward end, said flanges respectively engaging said bearing members to set the retracted positions of the pistons.

9. A master cylinder according to any one of Claims 6 to 9 characterised in that each bearing member (21, 31) comprises two contiguous parts (21A, 21B 31A, 31B) and said passages (30, 39) are formed by grooves in the mating surfaces of the parts of each bearing member.

## Revendications

1. Maître-cylindre comprenant un corps de cylindre (1) contenant plusieurs chambres sous pression (A, B) disposées en position longitudinale, au sein desquelles du fluide est mis sous pression par l'action de pistons respectifs (16, 33) aptes à coulisser en leur sein, des raccords de sortie de fluide (17, 18) communiquant respectivement avec lesdites chambres, ainsi que des raccords d'entrée de fluide (11, 12) pour le raccordement à un moyen d'alimentation en fluide (R), les raccords d'entrée se trouvant en position transversale par rapport à l'axe longitudinal (C) du cylindre et communiquant respectivement avec lesdites chambres au moyen de passages (13 et 14, 15) pratiqués dans le corps (1), caractérisé en ce que les raccords d'entrée (11, 12) sont positionnés respectivement de chaque côté de l'axe longitudinal (C).

2. Maître-cylindre selon la revendication 1, caractérisé en ce que les raccords d'entrée (11, 12) sont disposés à proximité de l'extrémité avant du cylindre en direction de la course de travail des pistons (16, 33).

3. Maître-cylindre selon la revendication 1 ou 2, caractérisé en ce que lesdits raccords de sortie de fluide (17, 18) sont disposés de chaque côté des raccords d'entrée dans la direction longitudinale du cylindre.

4. Maître-cylindre selon l'une quelconque des revendications 1 à 3, caractérisé en ce qu'un raccord (17) des raccords de sortie de fluide se trouve dans un bouchon externe (3) fixé au corps du cylindre à l'extrémité avant de ce dernier.

5. Maître-cylindre selon l'une quelconque des revendications précédentes, caractérisé en ce que lesdits raccords d'entrée de fluide (11, 12) possèdent des tourillons respectifs d'alimentation (11A, 12A) d'un réservoir, qui y sont engrenés en relation d'étanchéité.

6. Maître-cylindre selon l'une quelconque des revendications précédentes, caractérisé en ce que le corps de cylindre (1) possède des éléments de support annulaires internes (21, 31) dont la dimension radiale des surfaces internes est inférieure à celle du cylindre et qui font office de surfaces de support de coulissement pour les pistons, chacun desdits éléments portant au moins un joint étanche (26, 36) agissant sur la surface externe du piston, qui lui est associée, et étant muni d'un passage (30, 39) qui le traverse en procurant une communication entre un desdits raccords d'entrée de fluide (11, 12) et une desdites chambres (A, B).

7. Maître-cylindre selon la revendication 6, caractérisé en ce que chaque élément de support (21, 31) est maintenu à demeure au sein du corps entre des surfaces à surfaces frontales opposées fixes, dont au moins une (19, 20) est située sur le corps (1).

8. Maître-cylindre selon la revendication 6 ou 7, caractérisé en ce que chaque piston (16, 31) est muni, à son extrémité avant, d'une bride (22, 34) faisant saillie en direction radiale, lesdites brides venant respectivement se mettre en contact avec lesdits éléments de support pour fixer les positions rétractées des pistons.

9. Maître-cylindre selon l'une quelconque des revendications 6 à 9, caractérisé en ce que chaque élément de support (21, 31) comprend deux parties contiguës (21A, 21B, 31A, 31B), lesdits passages (30, 39) étant façonnés par des rainures pratiquées dans les surfaces de jointement des parties de chaque élément de support.

**Patentansprüche**

1. Hauptzylinder mit einem Zylindergehäuse (1), das eine Vielzahl von in Längsrichtung angeordneten Druckkammern (A, B) enthält, in denen Strömungsmittel durch die Wirkung von entsprechenden, darin gleitenden Kolben (16, 33) unter Druck gesetzt wird, Strömungsmittelauslaßanschlüssen (17, 18), die mit den Kammern in Verbindung stehen, und Strömungsmitteleinlaßanschlüssen (11, 12) zum Anschließen von Strömungsmittelversorgungseinrichtungen (R), wobei die Einlaßverbindungen quer zur Längsachse (C) des Zylinders angeordnet sind und mit Hilfe von im Gehäuse (1) ausgebildeten Kanälen (13 und 14, 15) mit den Kammern in Verbindung stehen, **dadurch gekennzeichnet, daß** die Einlaßanschlüsse (11, 12) jeweils zu jeder Seite der Längsachse (C) hin angeordnet sind.

2. Hauptzylinder nach Anspruch 1, **dadurch gekennzeichnet, daß** die Einlaßanschlüsse (11, 12) in Richtung auf das vordere Ende des Zylinders in Richtung des Arbeitshubes der Kolben (16, 33) angeordnet sind.

3. Hauptzylinder nach Anspruch 1 oder 2, **dadurch gekennzeichnet, daß** die Strömungsmittelauslaßanschlüsse (17, 18) auf jeder Seite der Einlaßanschlüsse in Längsrichtung des Zylinders angeordnet sind.

4. Hauptzylinder nach einem der Ansprüche 1 bis 3, **dadurch gekennzeichnet, daß** einer (17) der Strömungsmittelauslaßanschlüsse in einer Endkappe (3) angeordnet ist, die am Zylindergehäuse am vorderen Ende desselben befestigt ist.

5. Hauptzylinder nach einem der vorangehenden Ansprüche, **dadurch gekennzeichnet, daß** die Strömungsmitteleinlaßanschlüsse (11, 12) entsprechende Versorgungszapfen (11A, 12A) eines Speichers aufweisen, die darin in abgedichteter Weise mit Eingriff angeordnet sind.

6. Hauptzylinder nach einem der vorangehenden Ansprüche, **dadurch gekennzeichnet, daß** das Zylindergehäuse (1) innere ringförmige Lagerelemente (21, 31) besitzt, deren Innenflächen eine radiale Abmessung aufweisen, die kleiner ist als die des Zylinders, und die als Gleitlagerflächen für die Kolben dienen, wobei jedes Lagerelement mindestens eine Dichtung (26, 36) trägt, die auf die zugehörige äußere Kolbenfläche einwirkt und durch die sich ein Kanal (30, 39) erstreckt, der eine Verbindung zwischen einem der Strömungsmitteleinlaßanschlüsse (11, 12) und einer der Kammern (A, B) vorsieht.

7. Hauptzylinder nach Anspruch 6, **dadurch gekennzeichnet, daß** jedes Lagerelement (21, 31) zwangsweise im Gehäuse zwischen gegenüberliegenden festen Flächen gehalten wird, von denen mindestens eine (19, 20) am Gehäuse (1) angeordnet ist.

8. Hauptzylinder nach Anspruch 6 oder 7, **dadurch gekennzeichnet, daß** jeder Kolben (16, 31) an seinem vorderen Ende einen radial vorstehendne Flansch (22, 34) besitzt, wobei diese Flansche mit den Lagerelementen in Eingriff stehen, um die zurückgezogenen Positionen der Kolben festzulegen.

9. Hauptzylinder nach einem der Ansprüche 6 bis 9, **dadurch gekennzeichnet, daß** jedes Lagerelement (21, 31) zwei aneinander stoßende Teile (21A, 21B, 31A, 31B) aufweist und daß die Kanäle (30, 39) durch Nuten in den Paßflächen der Teile eines jeden Lagerelementes gebildet sind.

FIG 1

FIG 2

FIG 3

FIG 5

FIG 4